# EUROPEAN PATENT APPLICATION

(11) **EP 4 556 994 A1**
(43) Date of publication of application: **21.05.2025**
(21) Application number: 22951124.1
(22) Date of filing: 13.07.2022
(51) Int. Cl.: G02F 3/00

(54) **OPTICAL CIRCUIT, QUANTUM COMPUTING APPARATUS, AND OPTICAL CIRCUIT MANUFACTURING METHOD**

(71) Applicant: FUJITSU LIMITED, Kawasaki-shi, Kanagawa 211-8588 (JP)
(72) Inventor: MIYATAKE, Teysuya, Kawasaki-shi, Kanagawa 211-8588 (JP); ISHIGURO, Tetsuro, Kawasaki-shi, Kanagawa 211-8588 (JP); KAWAGUCHI, Kenichi, Kawasaki-shi, Kanagawa 211-8588 (JP)
(74) Representative: Haseltine Lake Kempner LLP
(86) International application number: PCT/JP2022/027625
(87) International publication number: WO 2024/013910

(57) **Abstract**

An optical circuit includes: a first optical waveguide that extends in a first direction and uses diamond as a material; a plurality of second optical waveguides each of which uses diamond as a material, includes a color center, is coupled to the first optical waveguide, and extends in a direction different from the first direction; and a third optical waveguide that includes a material having a refractive index lower than a refractive index of diamond and coupled to the first optical waveguide.

## Description

### FIELD

The disclosed technology relates to an optical circuit and a method for manufacturing the optical circuit.

### BACKGROUND

As a technology related to an optical circuit, the following technology is known. For example, a photonic integrated circuit is known that includes a substrate, an array of waveguides integrated with the substrate, and a solid-state chip integrated onto the substrate in alignment with the array of waveguides. The solid-state chip includes an array of quantum emitters formed in a solid-state chip, to emit single photons.

Examples of the related art include [Patent Document 1] U.S. Patent Application Publication No. 2021/224678.

### SUMMARY

### TECHNICAL PROBLEM

A quantum operation device using a color center, which is a complex defect constituted by a vacancy in which carbon atoms are deficient in a diamond single crystal and an impurity atom adjacent to the vacancy, may be expected to operate at a high temperature and be highly integrated, and research and development of the quantum operation device have become active in recent years. In this type of quantum operation device, the color center functions as a qubit, and the color center is irradiated with light for qubit operation. The quantum operation device may include an optical circuit including a first optical waveguide (nanobeam) using diamond including the color center as a material and a second optical waveguide that is constituted of a material having a refractive index lower than that of diamond and is coupled to the first optical waveguide (nanobeam). Light emitted from the color center is guided to a photodetector through the second optical waveguide.

The color center is formed by implanting impurities into a diamond substrate. However, it is difficult to form a color center having high luminous efficiency at a desired position in the diamond substrate. For this reason, the first optical waveguide (nanobeam) is produced by selecting the color center having high luminous efficiency from the diamond substrate and cutting regions including the selected color center one by one from the diamond substrate. The second optical waveguide is produced separately from the first optical waveguide (nanobeam) and is coupled to the first optical waveguide (nanobeam). According to the optical circuit produced by the method described above, only one nanobeam (qubit) is coupled to one optical waveguide. For this reason, an increase in a size of the optical circuit with an increase in the number of bits becomes remarkable, and large-scale integration is difficult.

An object of the disclosed technology is to enable large-scale integration in an optical circuit including a color center.

### SOLUTION TO PROBLEM

An optical circuit according to the disclosed technology includes: a first optical waveguide that extends in a first direction and uses diamond as a material; a plurality of second optical waveguides each of which uses diamond as a material, includes a color center, is coupled to the first optical waveguide, and extends in a direction different from the first direction; and a third optical waveguide that includes a material having a refractive index lower than a refractive index of diamond and coupled to the first optical waveguide.

### ADVANTAGEOUS EFFECTS OF INVENTION

According to the disclosed technology, large-scale integration is possible in an optical circuit including a color center.

### BRIEF DESCRIPTION OF DRAWINGS

FIG. 1A is a plan view illustrating an example of a configuration of an optical circuit according to an embodiment of the disclosed technology.
FIG. 1B is a cross-sectional view taken along a line 1B-1B in FIG. 1A.
FIG. 2 is a plan view illustrating an example of a configuration of a first optical circuit according to the embodiment of the disclosed technology.
FIG. 3A is a plan view illustrating an example of a method for manufacturing the optical circuit according to the embodiment of the disclosed technology.
FIG. 3B is a plan view illustrating an example of the method for manufacturing the optical circuit according to the embodiment of the disclosed technology.
FIG. 3C is a plan view illustrating an example of the method for manufacturing the optical circuit according to the embodiment of the disclosed technology.
FIG. 3D is a plan view illustrating an example of the method for manufacturing the optical circuit according to the embodiment of the disclosed technology.
FIG. 3E is a plan view illustrating an example of the method for manufacturing the optical circuit according to the embodiment of the disclosed technology.
FIG. 3F is a plan view illustrating an example of the method for manufacturing the optical circuit according to the embodiment of the disclosed technology.
FIG. 3G is a plan view illustrating an example of the method for manufacturing the optical circuit according to the embodiment of the disclosed technology.
FIG. 4 is a plan view illustrating an example of a configuration of an optical circuit according to a comparative example.
FIG. 5A is a plan view illustrating an example of the configuration of the first optical circuit according to the embodiment of the disclosed technology.
FIG. 5B is a plan view illustrating an example of the configuration of the first optical circuit according to the embodiment of the disclosed technology.
FIG. 5C is a plan view illustrating an example of the configuration of the first optical circuit according to the embodiment of the disclosed technology.
FIG. 6A is a plan view illustrating an example of the configuration of the first optical circuit according to the embodiment of the disclosed technology.
FIG. 6B is a plan view illustrating an example of the configuration of the first optical circuit according to the embodiment of the disclosed technology.
FIG. 7A is a plan view illustrating an example of the configuration of the optical circuit according to the embodiment of the disclosed technology.
FIG. 7B is a cross-sectional view taken along a line 7B-7B in FIG. 7A.
FIG. 8A is a plan view illustrating an example of the method for manufacturing the optical circuit according to the embodiment of the disclosed technology.
FIG. 8B is a cross-sectional view taken along a line 8B-8B in FIG. 8A.
FIG. 9A is a plan view illustrating an example of the method for manufacturing the optical circuit according to the embodiment of the disclosed technology.
FIG. 9B is a cross-sectional view taken along a line 9B-9B in FIG. 9A.
FIG. 10A is a plan view illustrating an example of the method for manufacturing the optical circuit according to the embodiment of the disclosed technology.
FIG. 10B is a cross-sectional view taken along a line 10B-10B in FIG. 10A.
FIG. 11 is a plan view illustrating an example of a configuration of a first optical circuit according to another embodiment of the disclosed technology.
FIG. 12 is a diagram illustrating an example of a configuration of a quantum operation device according to an embodiment of the disclosed technology.
FIG. 13 is a diagram illustrating an example of the configuration of the quantum operation device according to the embodiment of the disclosed technology.

### DESCRIPTION OF EMBODIMENTS

Hereinafter, an example of embodiments of the disclosed technology will be described with reference to the drawings. Note that, in each drawing, the same or equivalent components and portions are denoted with the same reference signs, and redundant description will be omitted.

### [First Embodiment]

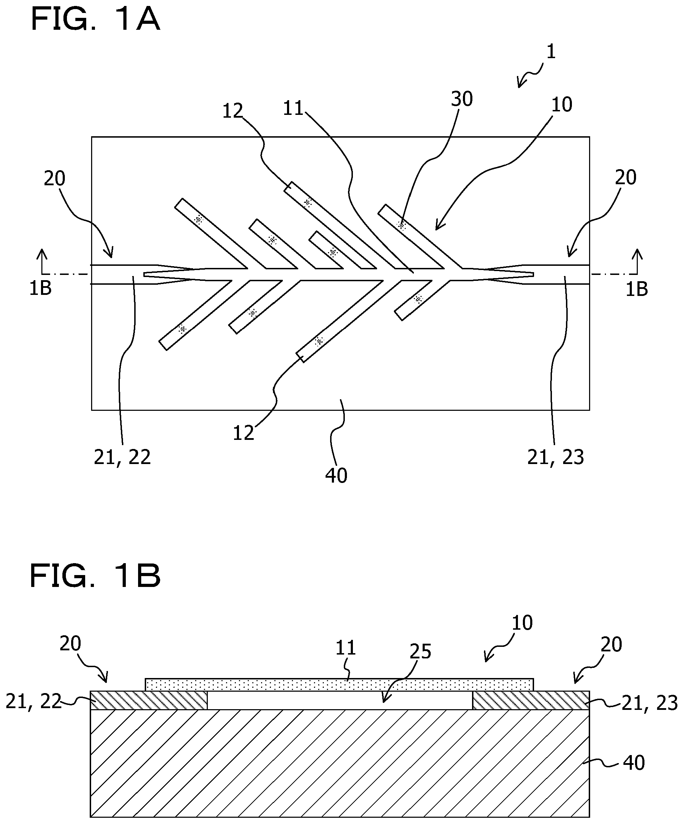

FIG. 1A is a plan view illustrating an example of a configuration of an optical circuit 1 according to an embodiment of the disclosed technology. FIG. 1B is a cross-sectional view taken along a line 1B-1B in FIG. 1A. The optical circuit 1 includes a substrate 40, and a first optical circuit 10 and a second optical circuit 20 provided to the substrate 40. Although not particularly limited, for example, a silicon substrate may be used as the substrate 40. The silicon substrate may be obtained by providing a silicon oxide film (SiO₂ film or the like) to a surface of a silicon layer.

The first optical circuit 10 includes a first optical waveguide 11 and a plurality of second optical waveguides 12. The first optical waveguide 11 and the second optical waveguides 12 are integrally configured. The first optical waveguide 11 is a linear optical waveguide using diamond as a material. Note that the first optical waveguide 11 may be bent or curved. Each of the plurality of second optical waveguides 12 uses diamond including a color center 30 as a material. The color center 30 is a complex defect constituted by a vacancy in which carbon atoms are deficient in a diamond crystal and an impurity atom adjacent to the vacancy. The impurity may be, for example, nitrogen, germanium, silicon, tin, or lead. The color center 30 functions as a qubit of a quantum operation device including the optical circuit 1.

Each of the plurality of second optical waveguides 12 includes the single color center 30. In other words, the one second optical waveguide 12 does not include two or more color centers. Therefore, the one second optical waveguide 12 may correspond to one qubit. Furthermore, the first optical waveguide 11 does not include the color center. When the color center exists in the first optical waveguide 11, light emitted from the color center becomes noise. Since the first optical waveguide 11 does not include the color center, noise components may be eliminated.

The respective second optical waveguides 12 are coupled to a plurality of portions along an extending direction of the first optical waveguide 11, and extend in directions intersecting the extending direction of the first optical waveguide 11. The plurality of second optical waveguides 12 is coupled to both sides of sides facing each other along the extending direction of the first optical waveguide 11. Light emitted from the color center 30 is guided to the first optical waveguide 11 through the second optical waveguides 12. In the first optical circuit 10, the second optical waveguides 12 constitute nanobeams, and the first optical waveguide 11 functions as a bus line integrating the plurality of nanobeams.

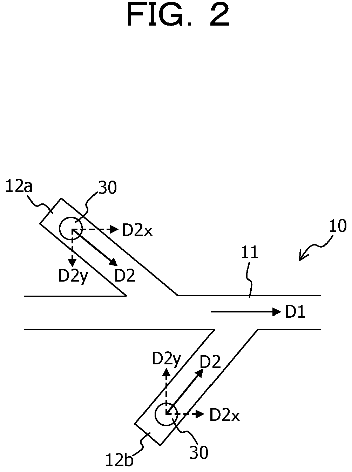

The respective plurality of second optical waveguides 12 are coupled to the first optical waveguide 11 in directions in which traveling directions in the first optical waveguide 11 of light emitted from the color centers 30 are mutually the same. In other words, the traveling direction of the light emitted from the color center 30 in each of the second optical waveguides 12 has the same direction component as the traveling direction of the light in the first optical waveguide 11. For example, as illustrated in FIG. 2, traveling directions D2 of the light emitted from the color centers 30 in the second optical waveguides 12a and 12b have the same direction components D2x as a traveling direction D1 of the light in the first optical waveguide 11. Note that widths of the first optical waveguide 11 and the second optical waveguides 12 in a plane direction may be larger than heights thereof in order to propagate a polarization component (TE mode) in the plane direction. Furthermore, the widths of the first optical waveguide 11 and the second optical waveguides 12 in the plane direction may be smaller than the heights thereof in order to propagate a polarization component (TM mode) in a direction orthogonal to the plane direction.

The second optical circuit 20 includes a third optical waveguide 21 coupled to ends of the first optical waveguide 11 in the extending direction. The third optical waveguide 21 includes a first portion 22 coupled to one end of the first optical waveguide 11 in the extending direction and a second portion 23 coupled to the other end of the first optical waveguide 11 in the extending direction. As illustrated in FIG. 1B, the optical circuit 1 has a structure in which the first optical waveguide 11 and the third optical waveguide 21 are laminated. A cavity 25 is formed in a region between the first portion 22 and the second portion 23 of the third optical waveguide 21 and between the first optical waveguide 11 and the substrate 40. The third optical waveguide 21 is essentially constituted of a material having a refractive index lower than that of diamond. As the material of the third optical waveguide 21, for example, sapphire (Al₂O₃), silicon oxide (SiO₂ or the like), silicon nitride (SiN or the like), silicon carbide (SiC or the like), or the like may be used. Light emitted from the color center 30 is guided to the third optical waveguide 21 through the first optical waveguide 11 and the second optical waveguides 12. Since the third optical waveguide 21 is essentially constituted of the material having the refractive index lower than that of the diamond that is the material of the first optical circuit 10, reflection of the light at an interface between the first optical waveguide 11 and the third optical waveguide 21 may be suppressed, and an optical loss may be suppressed. For example, the third optical waveguide 21 may guide the light emitted from the color center 30 to a photodetector (not illustrated).

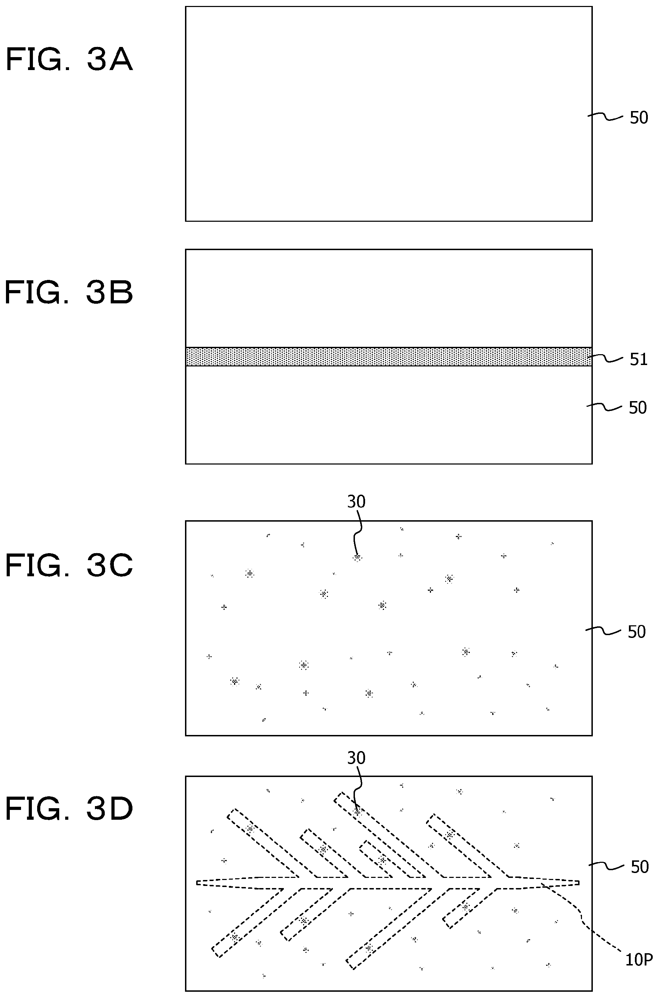

Hereinafter, a method for manufacturing the optical circuit 1 according to the present embodiment will be described. FIGs. 3A to 3G are plan views illustrating an example of the method for manufacturing the optical circuit 1.

First, a diamond substrate 50 to be a material of the first optical circuit 10 is prepared (FIG. 3A). Next, a resist 51 that covers a planned formation position of the first optical waveguide 11 of the diamond substrate 50 is formed (FIG. 3B).

Next, impurity atoms are implanted into the diamond substrate 50 via the resist 51 by an ion implantation method. The impurity may be, for example, nitrogen, germanium, silicon, tin, or lead. The plurality of color centers 30 is formed in the diamond substrate 50 by the impurity implantation. The color center is not formed in a portion of the diamond substrate 50 covered with the resist 51, in other words, the planned formation position of the first optical waveguide 11. After the impurity implantation, the resist 51 is removed (FIG. 3C).

Light emission characteristics of the plurality of color centers 30 formed in the diamond substrate 50 are not uniform, and those having good light emission characteristics and those not having good light emission characteristics are mixed. Therefore, among the plurality of color centers 30 formed in the diamond substrate 50, the color centers 30 that satisfy a predetermined condition related to the light emission characteristics are selected. For example, the color centers 30 in which intensity of light emitted from the color center 30 by irradiating the diamond substrate 50 with laser light is equal to or greater than a threshold may be selected. In other words, the color centers 30 exhibiting good light emission characteristics are picked up.

Next, in consideration of a selection result of the color centers 30, a pattern 10P of the first optical circuit 10 to be cut from the diamond substrate 50 is formulated (FIG. 3D). In other words, a region not including the color center of the diamond substrate 50 is determined as a region of the first optical waveguide 11. Furthermore, a layout of the second optical waveguides 12 is formulated such that each of the plurality of second optical waveguides 12 includes the color center 30 that satisfies the predetermined condition, is coupled to each of a plurality of portions along the extending direction of the first optical waveguide 11, and has a pattern extending in a direction intersecting the extending direction of the first optical waveguide 11.

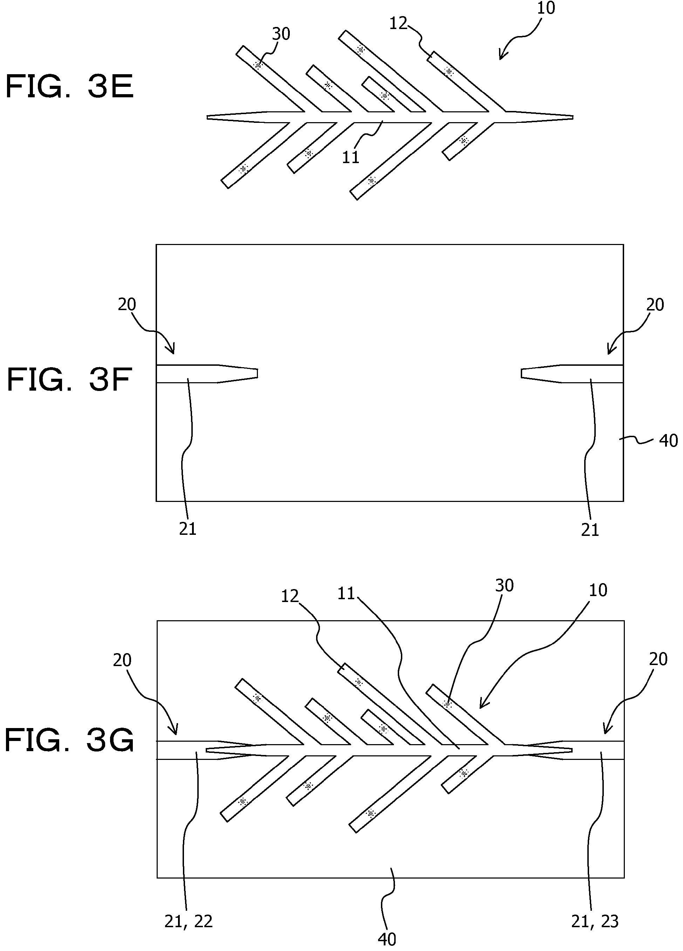

Next, by etching the diamond substrate 50, the first optical circuit 10 having the pattern 10P formulated in the step described above is cut from the diamond substrate 50 (FIG. 3E). In other words, the first optical circuit 10 includes the first optical waveguide 11 that does not include the color center. Furthermore, the first optical circuit 10 includes the plurality of second optical waveguides 12 each of which includes the color center 30 that satisfies the predetermined condition related to the light emission characteristics, is coupled to each of the plurality of portions along the extending direction of the first optical waveguide 11, and extends in the direction intersecting the extending direction of the first optical waveguide 11.

Next, the second optical circuit 20 is formed separately from the first optical circuit 10. Specifically, the substrate 40 having a low refractive index material layer having a refractive index lower than that of diamond at a surface thereof is prepared. The low refractive index material layer may include, for example, sapphire (Al₂O₃), silicon oxide (SiO₂ or the like), silicon nitride (SiN or the like), or silicon carbide (SiC or the like). Next, the low refractive index material layer is patterned by etching or the like to form the second optical circuit 20 including the third optical waveguide 21 on the substrate 40 (FIG. 3F).

Next, the first optical circuit 10 is mounted on the second optical circuit 20. The first optical circuit 10 and the second optical circuit 20 are coupled by intermolecular force. The first portion 22 of the third optical waveguide 21 is coupled to one end of the first optical waveguide 11, and the second portion 23 of the third optical waveguide 21 is coupled to the other end of the first optical waveguide 11 (FIG. 3G).

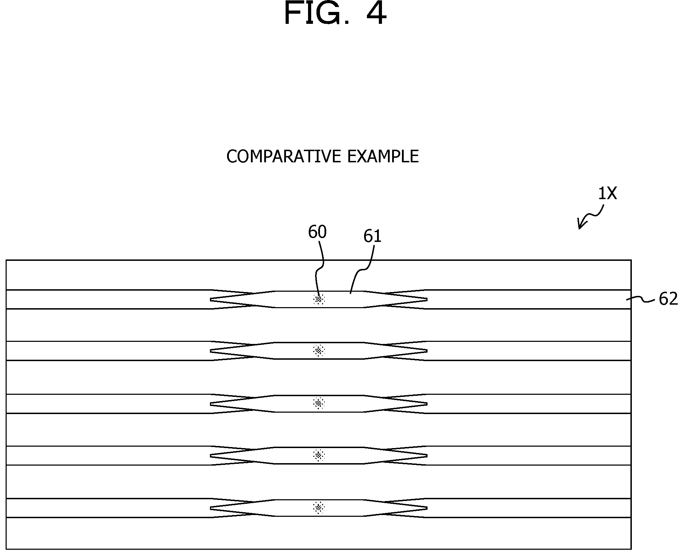

Here, FIG. 4 is a plan view illustrating an example of a configuration of an optical circuit 1X according to a comparative example. The optical circuit 1X according to the comparative example includes a plurality of optical waveguides 61 (nanobeams) using diamond including a color center 60 as a material, and a plurality of optical waveguides 62 provided corresponding to the respective optical waveguides 61 and essentially constituted of a material having a refractive index lower than that of diamond. As described above, the color center is formed by implanting impurities into a diamond substrate. However, it is difficult to form a color center having high luminous efficiency at a desired position in the diamond substrate. For this reason, the first optical waveguides (nanobeam) are produced by selecting the color center having high luminous efficiency from the diamond substrate and cutting regions including the selected color center one by one from the diamond substrate. The optical waveguides 62 are produced separately from the optical waveguides 61 (nanobeams) and are coupled to the optical waveguides 61 (nanobeams). According to the optical circuit 1X according to the comparative example, only one nanobeam (qubit) is coupled to one optical waveguide. For this reason, an increase in a size of the optical circuit with an increase in the number of bits becomes remarkable, and large-scale integration is difficult.

On the other hand, the optical circuit 1 according to the embodiment of the disclosed technology includes the first optical waveguide 11 using diamond as the material. Furthermore, the optical circuit 1 includes the plurality of second optical waveguides 12 each of which includes diamond including the color center 30 as the material, is coupled to each of the plurality of portions along the extending direction of the first optical waveguide 11, and extends in the direction intersecting the extending direction of the first optical waveguide 11. Furthermore, the optical circuit 1 includes the third optical waveguide 21 essentially constituted of the material having the refractive index lower than that of diamond and coupled to the ends of the first optical waveguide 11 in the extending direction.

According to the optical circuit 1 according to the embodiment of the disclosed technology, since the plurality of nanobeams (qubits) is coupled to one optical waveguide, it is possible to suppress an increase in a size of the optical circuit with an increase in the number of bits, and to perform large-scale integration.

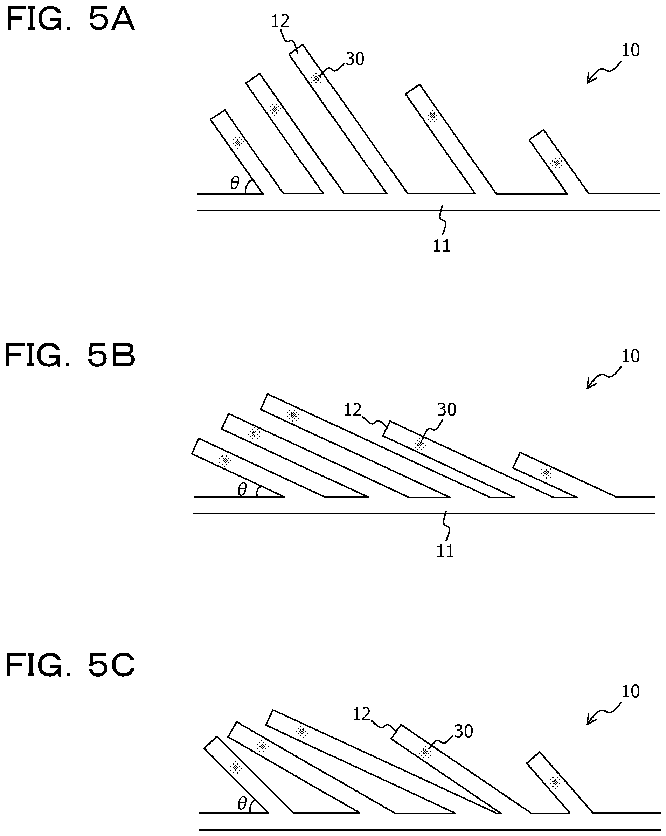

Note that, in the above description, the configuration in which the plurality of second optical waveguides 12 is coupled to both sides of the sides facing each other along the extending direction of the first optical waveguide 11 in the first optical circuit 10 is exemplified, but the disclosed technology is not limited to this aspect. FIGs. 5A, 5B, and 5C are plan views illustrating an example of the configuration of the first optical circuit 10 according to a modification. As illustrated in FIGs. 5A to 5C, in the first optical circuit 10, the plurality of second optical waveguides 12 may be coupled only to one side of the sides facing each other along the extending direction of the first optical waveguide 11. Furthermore, an angle θ formed by the first optical waveguide 11 and the second optical waveguide 12 may be set to an optional size. FIG. 5A is an example of a case where the formed angle θ is relatively large, and FIG. 5B is an example of a case where the formed angle θ is relatively small. From a viewpoint of reducing a light loss at a coupling portion between the first optical waveguide 11 and the second optical waveguide 12, it is preferable that the angle θ is small. Furthermore, as illustrated in FIG. 5C, the formed angle θ may be non-uniform. In a case where the light loss at the coupling portion between the first optical waveguide 11 and the second optical waveguide 12 may be sufficiently reduced, it is preferable to appropriately adjust the formed angle θ to take more color centers 30 into the first optical circuit 10.

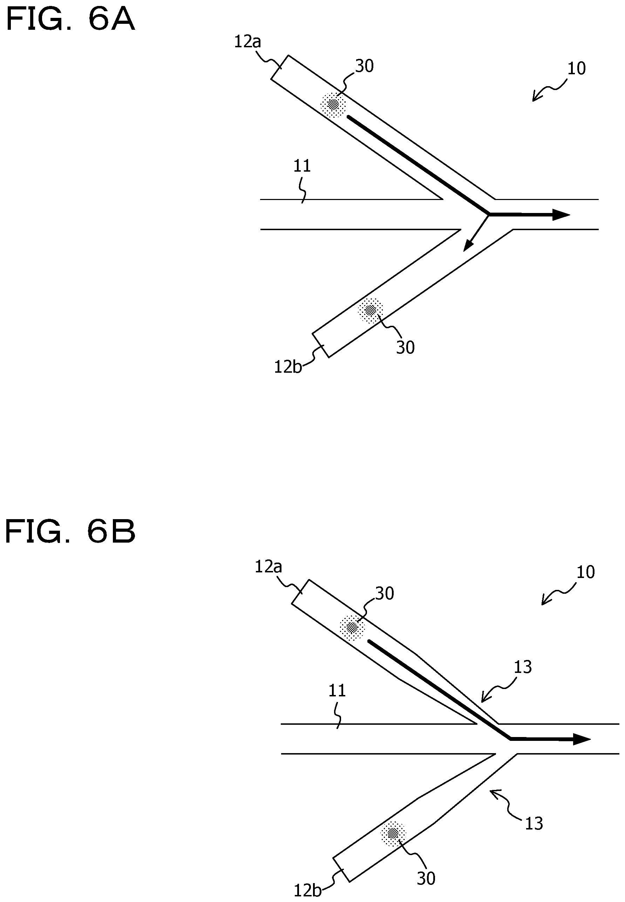

FIG. 6A is a plan view illustrating a case where coupling portions of the second optical waveguides 12a and 12b with the first optical waveguide 11 are close to each other in the configuration in which the second optical waveguides 12a and 12b are coupled to both sides of the sides facing each other of the first optical waveguide 11. In this case, a part of light emitted from the color center 30 included in the second optical waveguide 12a is propagated to the second optical waveguide 12b, resulting in a loss. As illustrated in FIG. 6B, by providing the second optical waveguides 12a and 12b with tapered portions 13 whose widths gradually decrease toward the coupling portions with the first optical waveguide 11, the propagation of the light emitted from the color center 30 of the second optical waveguide 12a to the second optical waveguide 12b may be avoided. This is because the tapered portions 13 change a coupling characteristic of light in the second optical waveguide 12b. Note that the pattern of the first optical circuit 10 may be formulated such that the coupling portions of the second optical waveguides 12a and 12b with the first optical waveguide 11 do not come close to each other.

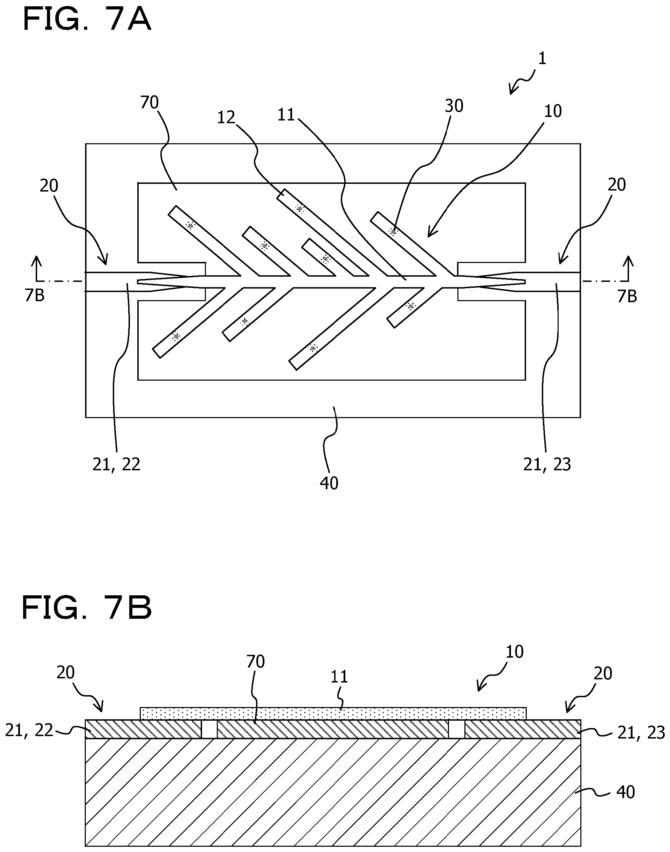

FIG. 7A is a plan view illustrating an example of the configuration of the optical circuit 1 according to the modification, and FIG. 7B is a cross-sectional view taken along a line 7B-7B in FIG. 7. The third optical waveguide 21 includes the first portion 22 coupled to the one end of the first optical waveguide 11 in the extending direction and the second portion 23 coupled to the other end of the first optical waveguide 11 in the extending direction. The optical circuit 1 according to the present modification includes a support portion 70 that supports the first optical circuit 10 (in other words, the first optical waveguide 11 and the second optical waveguides 12) between the first portion 22 and the second portion 23 of the third optical waveguide 21. The support portion 70 is provided between the first optical circuit 10 and the substrate 40, and supports the first optical circuit 10 from a lower surface side. By providing the support portion 70, a load resistance of the first optical circuit 10 may be enhanced.

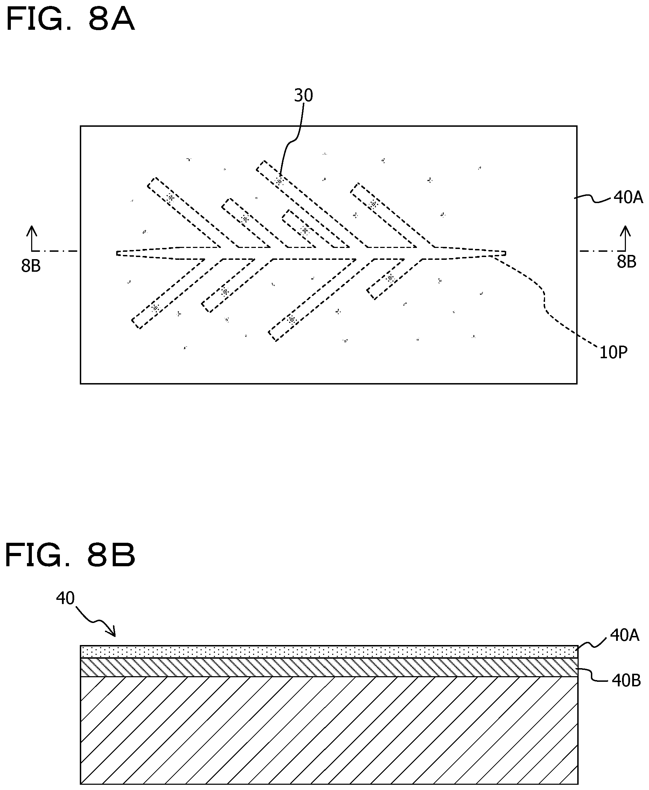

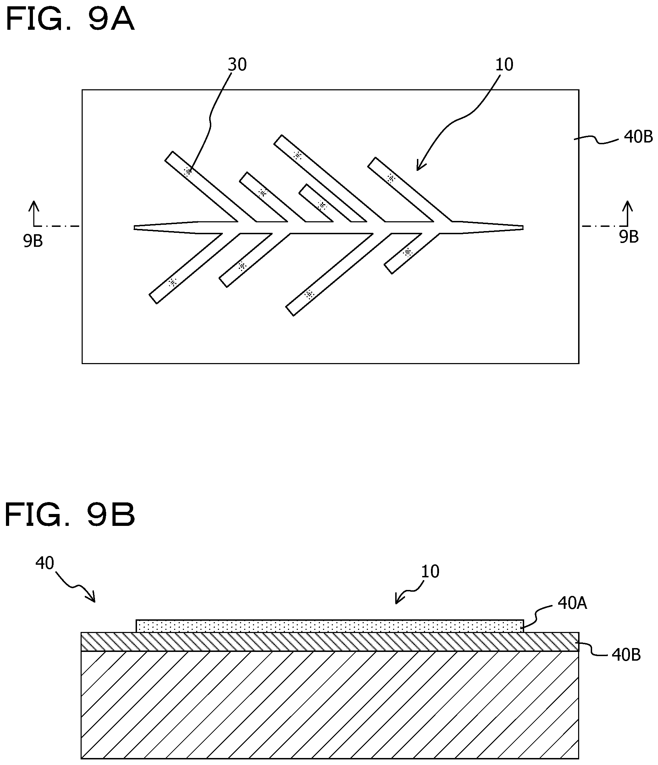

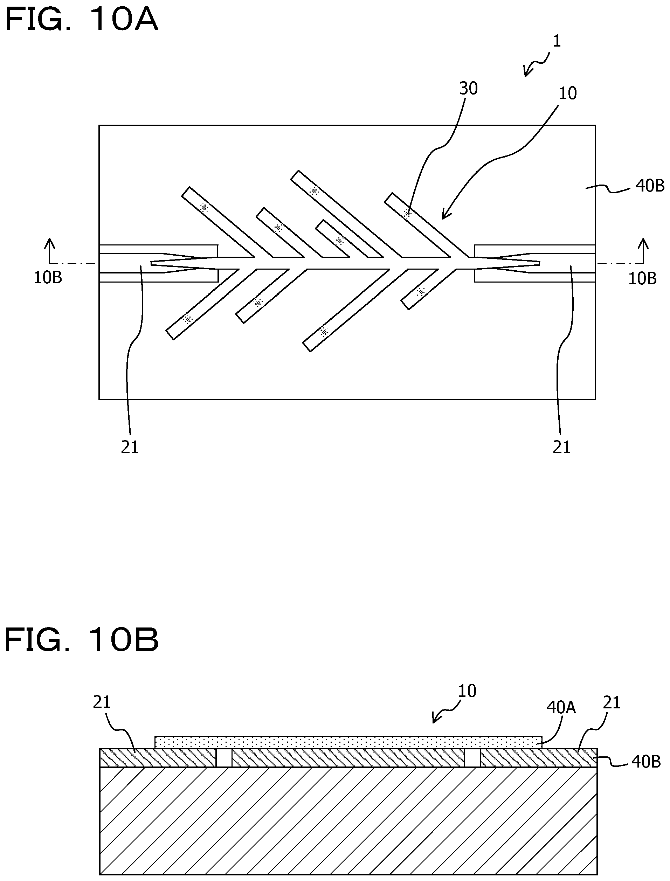

FIGs. 8A, 9A, and 10A are plan views illustrating another example of the method for manufacturing the optical circuit 1. FIG. 8B is a cross-sectional view taken along a line 8B-8B in FIG. 8A, FIG. 9B is a cross-sectional view taken along a line 9B-9B in FIG. 9A, and FIG. 10B is a cross-sectional view taken along a line 10B-10B in FIG. 10A.

First, the substrate 40 at which a diamond layer 40A and a low refractive index material layer 40B essentially constituted of a material having a refractive index lower than that of diamond are laminated is prepared. Next, impurity atoms are implanted into the diamond layer 40A by the ion implantation method to form the plurality of color centers 30 in the diamond layer 40A. Next, among the plurality of color centers 30 formed in the diamond layer 40A, the color centers 30 that satisfy the predetermined condition related to the light emission characteristics are selected. Next, in consideration of a selection result of the color centers 30, the pattern 10P of the first optical circuit 10 to be cut from the diamond layer 40A is formulated (FIG. 8A).

Next, by etching the diamond layer 40A, the first optical circuit 10 having the pattern 10P formulated in the step described above is cut from the diamond layer 40A. In other words, the first optical circuit 10 is formed at a surface of the low refractive index material layer 40B (FIGs. 9A and 9B).

Next, by etching the low refractive index material layer 40B, the third optical waveguide 21 is cut from the low refractive index material layer 40B. For example, the third optical waveguide 21 is formed by etching the low refractive index material layer 40B so as to separate the third optical waveguide 21 from other portions (FIGs. 10A and 10B). By using the substrate 40 at which the diamond layer 40A and the low refractive index material layer 40B are laminated, the step of coupling the first optical circuit 10 and the second optical circuit 20 may be omitted.

### [Second Embodiment]

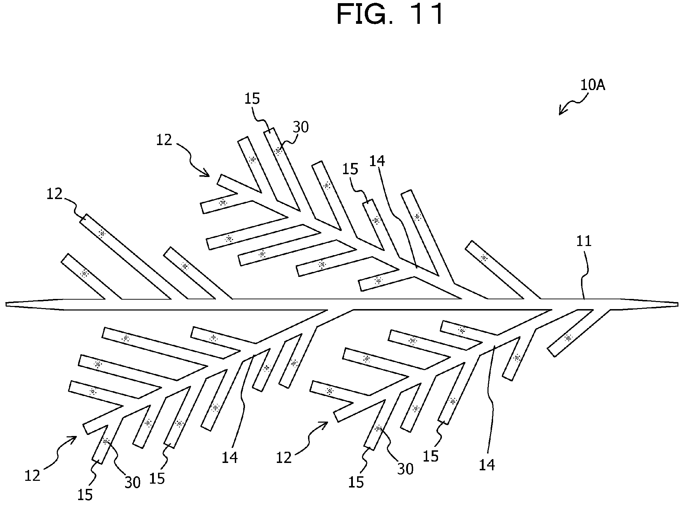

FIG. 11 is a plan view illustrating an example of a configuration of a first optical circuit 10A according to a second embodiment of the disclosed technology. Similarly to the first optical circuit 10 according to the first embodiment, the first optical circuit 10A according to the present embodiment includes a first optical waveguide 11 that functions as a bus line and a plurality of second optical waveguides 12 constituting nanobeams.

In the first optical circuit 10A according to the present embodiment, at least one of the plurality of second optical waveguides 12 includes a fourth optical waveguide 14 coupled to the first optical waveguide 11 and extending in a direction intersecting an extending direction of the first optical waveguide 11. Preferably, the fourth optical waveguide 14 does not include a color center. Furthermore, the first optical circuit 10A includes a plurality of fifth optical waveguides 15 each of which includes a color center 30 and is coupled to each of a plurality of portions along an extending direction of the fourth optical waveguide 14. In other words, the first optical circuit 10A has the configuration of the first optical circuit 10 according to the first embodiment as a configuration of the second optical waveguide 12.

According to the first optical circuit 10A of the present embodiment, since the number of nanobeams (qubits) coupled to one optical waveguide may be further increased, further large-scale integration may be performed.

### [Third Embodiment]

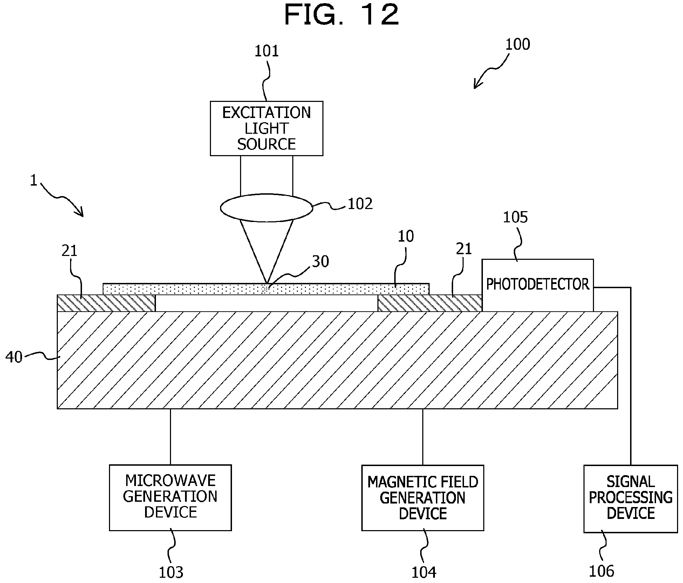

FIG. 12 is a diagram illustrating an example of a configuration of a quantum operation device 100 according to a third embodiment of the disclosed technology. The quantum operation device 100 is a quantum operation device of a diamond spin system, which uses an electron spin of a color center 30 included in a first optical circuit 10 as a qubit. The quantum operation device 100 includes an excitation light source 101, an optical system 102, a microwave generation device 103, a magnetic field generation device 104, a photodetector 105, and a signal processing device 106.

The excitation light source 101 outputs light for qubit operation. The light output from the excitation light source 101 is irradiated to the color center 30 formed in the first optical circuit 10 via the optical system 102. The optical system 102 may include a condenser lens that concentrates the light output from the excitation light source 101 on the color center 30. The color center 30 is excited by being irradiated with the light and generates light.

The microwave generation device 103 and the magnetic field generation device 104 generate a microwave and a magnetic field in conjunction with irradiation of the light from the excitation light source 101, respectively. A substrate 40 functions as a microwave generation circuit and a magnetic field generation circuit. The microwave and the magnetic field respectively output from the microwave generation device 103 and the magnetic field generation device 104 act on the color center 30 via the substrate 40.

The light emitted from the color center 30 is guided to the photodetector 105 through a third optical waveguide 21. The photodetector 105 is a single-photon detector, and detects the light emitted from the color center 30. The photodetector 105 may be provided on the substrate 40. The signal processing device 106 outputs an electric signal according to the light detected by the photodetector 105.

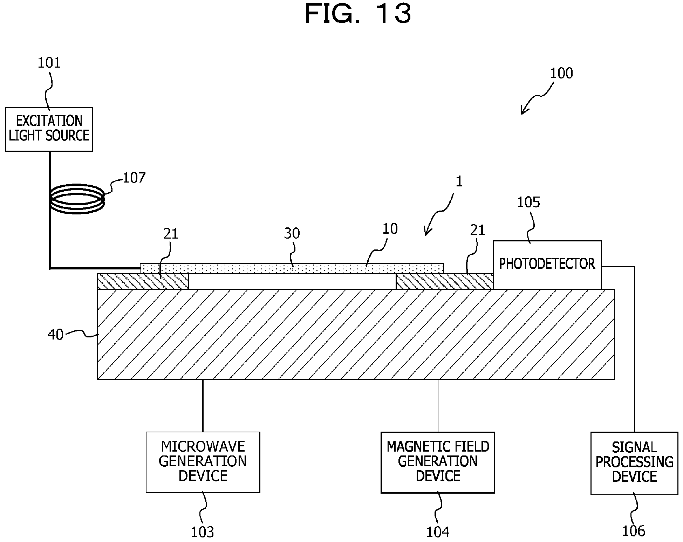

FIG. 13 is a diagram illustrating another example of the configuration of the quantum operation device 100. As illustrated in FIG. 13, light output from the excitation light source 101 may be introduced into the third optical waveguide 21 via an optical fiber 107 to excite the color center 30.

### CITATION LIST

### PATENT DOCUMENT

Patent Document 1: U.S. Patent Application Publication No. 2021/224678

### REFERENCE SIGNS LIST

1, 1XOptical circuit
10, 10AFirst optical circuit
11First optical waveguide
12, 12a, 12bSecond optical waveguide
13Tapered portion
14Fourth optical waveguide
15Fifth optical waveguide
20Second optical circuit
21Third optical waveguide
22First portion
23Second portion
30Color center
40Substrate
40ADiamond layer
40BLow refractive index material layer
50Diamond substrate
51Resist
70Support portion
100Quantum operation device
101Excitation light source
105Photodetector

## Claims

1. An optical circuit comprising:
a first optical waveguide that extends in a first direction and uses diamond as a material;
a plurality of second optical waveguides each of which uses diamond as a material, includes a color center, is coupled to the first optical waveguide, and extends in a direction different from the first direction; and
a third optical waveguide that includes a material having a refractive index lower than a refractive index of diamond, the third optical wave guide being coupled to the first optical waveguide.

2. The optical circuit according to claim 1, wherein
the respective plurality of second optical waveguides are coupled to the first optical waveguide in directions in which traveling directions in the first optical waveguide of light emitted from the color centers are mutually the same.

3. The optical circuit according to claim 1, wherein
the plurality of second optical waveguides is coupled to both sides of sides that face each other along the first direction of the first optical waveguide.

4. The optical circuit according to claim 3, wherein
at least one of the plurality of second optical waveguides has a tapered portion whose width gradually decreases toward a coupling portion with the first optical waveguide.

5. The optical circuit according to claim 1, wherein
the first optical waveguide does not include a color center.

6. The optical circuit according to claim 1, wherein
each of the plurality of second optical waveguides includes a single color center.

7. The optical circuit according to claim 1, wherein
the first optical waveguide and the second optical waveguides are integrally configured.

8. The optical circuit according to claim 1, wherein
a structure in which the first optical waveguide and the third optical waveguide are laminated is included.

9. The optical circuit according to claim 8, wherein
the third optical waveguide includes a first portion coupled to one end of the first optical waveguide in the first direction and a second portion coupled to the other end of the first optical waveguide in the first direction, and
a support portion that supports the first optical waveguide and the second optical waveguide is further provided between the first portion and the second portion.

10. The optical circuit according to claim 1, wherein
at least one of the plurality of second optical waveguides includes:
a fourth optical waveguide that is coupled to the first optical waveguide and extends in a second direction different from the first direction; and
a plurality of fifth optical waveguides each of which includes a color center and is coupled to the fourth optical waveguide.

11. A method for manufacturing an optical circuit, the method comprising:
forming a plurality of color centers in a first member that uses diamond as a material by implanting impurities into the first member; and
acquiring, from the first member, an optical circuit that includes a first optical waveguide that extends in a first direction and a plurality of second optical waveguides each of which includes at least one of the plurality of color centers, is coupled to the first optical waveguide, and extends in a direction different from the first direction.

12. The method for manufacturing an optical circuit according to claim 11, further comprising
specifying, from the plurality of color centers, a color center that satisfies a predetermined condition related to light emission characteristics before the acquiring the optical circuit.

13. The method for manufacturing an optical circuit according to claim 11, further comprising
coupling a third optical waveguide that includes a material having a refractive index lower than a refractive index of diamond to the first optical waveguide.

14. The manufacturing method according to claim 11, wherein
the impurities are implanted into the first member via a resist that covers a planned formation position of the first optical waveguide of the diamond.

15. The manufacturing method according to claim 13, wherein
the optical circuit that includes the first optical waveguide and the second optical waveguides is acquired from a diamond layer of the first member in which the diamond layer and a low refractive index material layer that includes a material having a refractive index lower than the refractive index of diamond are laminated, and
the third optical waveguide is acquired from the low refractive index material layer.

16. A quantum operation device comprising:
an optical circuit that includes a color center;
a light source for excitation of the color center; and
a photodetector that detects light emitted from the color center,
wherein the optical circuit includes:
a first optical waveguide that extends in a first direction and uses diamond as a material;
a plurality of second optical waveguides each of which uses diamond as a material, includes a color center, is coupled to the first optical waveguide, and extends in a direction different from the first direction; and
a third optical waveguide that includes a material having a refractive index lower than a refractive index of diamond, the third optical wave guide being coupled to the first optical waveguide.
